(19) Europäisches Patentamt / European Patent Office / Office européen des brevets

(11) **EP 2 415 638 B1**

(12) **FASCICULE DE BREVET EUROPEEN**

(45) Date de publication et mention
de la délivrance du brevet:
**21.12.2016 Bulletin 2016/51**

(51) Int Cl.:
***B60Q 1/14*** *(2006.01)* ***F21V 7/00*** *(2006.01)*
*F21Y 115/10* *(2016.01)*

(21) Numéro de dépôt: **11175156.6**

(22) Date de dépôt: **25.07.2011**

(54) **Unité optique pour dispositif de signalisation et/ou d'éclairage**

Optische Einheit für Vorrichtung zur Signalisierung und/oder Beleuchtung

Optical unit for a signalling and / or lighting device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.08.2010 FR 1056493**

(43) Date de publication de la demande:
**08.02.2012 Bulletin 2012/06**

(73) Titulaire: **VALEO VISION**
**93012 Bobigny Cedex (FR)**

(72) Inventeur: **Albou, Pierre**
**75013 PARIS (FR)**

(56) Documents cités:
**EP-A2- 0 999 408     EP-A2- 2 028 411
EP-A2- 2 279 908     DE-A1-102007 028 658
FR-A1- 2 787 863**

**Description**

L'invention concerne une unité optique, pour dispositif de signalisation et/ou d'éclairage pour véhicule automobile.

Il existe un besoin, dans le domaine de l'automobile, de pouvoir illuminer la route devant soi en "mode éclairage route partiel", à savoir générer dans un faisceau route une ou plusieurs plages sombres correspondant aux endroits où sont présents des véhicules venant en sens inverse ou des véhicules roulant devant, de manière à éviter l'éblouissement des autres conducteurs tout en éclairant la route dans sa plus grande surface. Une telle fonction est appelée ADB *(Adaptive Driving Beam* en anglais) ou encore « faisceau sélectif ».

On connaît par la demande de brevet EP 2 060 442 un dispositif d'éclairage propre à donner un faisceau lumineux composé de plusieurs nappes.

Habituellement, la partie des faisceaux à coupure verticale s'étendant sous l'horizontale se superpose au faisceau code complet (faisceau avec lumière à droite de la coupure en Trafic à Droite) ou à la partie à coupure plate de celui-ci (faisceau avec lumière à gauche de la coupure en Trafic à Droite) en créant un excès de lumière proche et une gêne pour le conducteur en mode ADB. Si, pour éviter cet effet, l'extrémité inférieure (floue et difficile à déterminer) des faisceaux à coupure verticale est placée à une hauteur voisine de celle de la coupure horizontale du code, le maximum d'intensité des faisceaux ADB se trouve alors placé trop haut et la portée utile est très réduite.

On connaît de EP099408 un autre dispositif d'éclairage.

L'invention vise à améliorer les dispositifs décrits et est définie par l'objet de la revendication 1.

L'invention permet notamment d'obtenir un faisceau à deux bords de coupure, ce faisceau étant bien adapté à la superposition avec un faisceau code (complet ou partiel, suivant le côté) pour réaliser des fonctions ADB sans ajouter de lumière proche et avec un maximum d'intensité placé près de l'intersection des deux bords de coupure (faisceau en « voile de navire »), ce qui donne une portée optimale.

De préférence, les premier et deuxième bords de coupure du faisceau complémentaire se coupent en formant sensiblement un angle droit.

Avantageusement, le premier bord de coupure s'étend sensiblement horizontalement et le deuxième bord sensiblement verticalement lorsque l'unité optique est monté sur le véhicule.

Dans un exemple de mise en oeuvre de l'invention, l'un au moins des premier et deuxième bords de coupure est sensiblement rectiligne.

Le cas échéant, les premier et deuxième bords de coupure peuvent être, à leur jonction, légèrement courbes, et non complètement rectilignes.

L'unité optique peut être dépourvue de mécanisme mobile, par exemple un cache mobile, pour produire les bords de coupure.

Ces bords sont, dans la présente invention, avantageusement produits par imagerie directe de la source lumineuse, c'est-à-dire par alignement des images de la source formées en chaque point du réflecteur, observées à l'infini (par exemple sur un écran situé à grande distance du réflecteur), de manière à ce qu'aucune partie de ces images ne croise les lignes de coupure et de préférence de manière à ce qu'un point ou un bord de chacune de ces images rencontre l'une ou les deux lignes de coupure.

Ceci peut permettre d'avoir une unité optique de conception plus simple.

Si on le souhaite, les deux secteurs réfléchissants sont jointifs suivant une bordure commune.

En variante, ces deux secteurs se rejoignent suivant seulement un point ou, en variante, sont distants (ou disjoints) l'un de l'autre, étant par exemple séparés par un troisième secteur réfléchissant.

De préférence, le faisceau complémentaire est associé à un faisceau à coupure, notamment une coupure code, ces deux faisceaux étant de préférence côte à côte, sensiblement sans recouvrement ou avec un faible recouvrement seulement.

Avantageusement, la source de lumière comporte au moins une LED (diode électroluminescente), notamment à émetteur rectangulaire de lumière.

Cet émetteur rectangulaire peut s'étendre notamment dans un plan, notamment un plan sensiblement horizontal, lorsque l'unité optique est montée sur le véhicule.

Avantageusement, l'un des côtés de l'émetteur de la LED est disposé de manière sensiblement parallèle à un axe optique du réflecteur.

Dans un exemple de mise en oeuvre de l'invention, le premier des secteurs réfléchissants du réflecteur présente une forme sensiblement de paraboloïde, de préférence avec un foyer sur l'un des coins de l'émetteur de la LED, ce premier secteur s'interrompant de préférence sur un plan, notamment vertical, contenant un bord de l'émetteur.

En variante, le premier secteur réfléchissant correspond à un secteur de surface complexe pour produire de la lumière seulement d'un côté de l'axe optique.

Les surfaces complexes considérées ici sont notamment des surfaces simples ou composées de secteurs ayant un bord commun de surfaces simples constituées par l'enveloppe intérieure (vue de la source) d'un ensemble de cylindres de sections droites composées d'un ou plusieurs arcs paraboliques formant une courbe continue et dérivable, d'axes perpendiculaires à une même direction (« verticale du réflecteur »), dont les lignes focales (correspondant à chaque arc parabolique) rencontrent une droite verticale (parallèle à la verticale du réflecteur) unique, et dont une génératrice est tangente à une courbe plane prédéterminée (appelée « génératrice de la surface complexe »).

Dans un exemple de mise en oeuvre de l'invention, le deuxième secteur réfléchissant correspond sensiblement à un quart de surface complexe avec une génératrice prédéterminée et un foyer unique sur un coin de l'émetteur.

Le cas échéant, le deuxième secteur réfléchissant peut correspondre à un secteur de surface complexe pour produire de la lumière seulement d'un côté de l'axe optique.

L'invention a encore pour objet un dispositif d'éclairage et/ou de signalisation, notamment un projecteur pour la droite ou la gauche d'un véhicule, comportant au moins une unité optique définie ci-dessus.

L'unité optique est avantageusement agencée pour produire un faisceau lumineux complémentaire ayant un axe optique et pouvant être associé à un autre faisceau, notamment à coupure, produit par ce dispositif d'éclairage et/ou de signalisation, pour participer à un faisceau global qui est réglable en fonction d'une information représentative de l'environnement du véhicule automobile, notamment d'une information représentative de la présence d'un véhicule tiers à proximité dudit véhicule

L'invention a également pour objet un ensemble de deux unités optiques selon la revendication 1, cet objet étant défini par la revendication 15.

L'invention a encore pour objet un procédé pour produire un faisceau lumineux pour véhicule automobile, à l'aide d'une unité optique selon la revendication 1, cet objet étant défini par la revendication 16.

L'invention pourra être mieux comprise à la lecture de la description détaillée qui va suivre, d'exemples de mise en oeuvre non limitatifs de l'invention, et à l'examen du dessin annexé, sur lequel :

- la figure 1 illustre, schématiquement et partiellement, une scène de route et la mise en oeuvre d'un exemple de l'invention,
- les figures 2 à 14 représentent, schématiquement et partiellement, différents exemples de mise en oeuvre de l'invention.

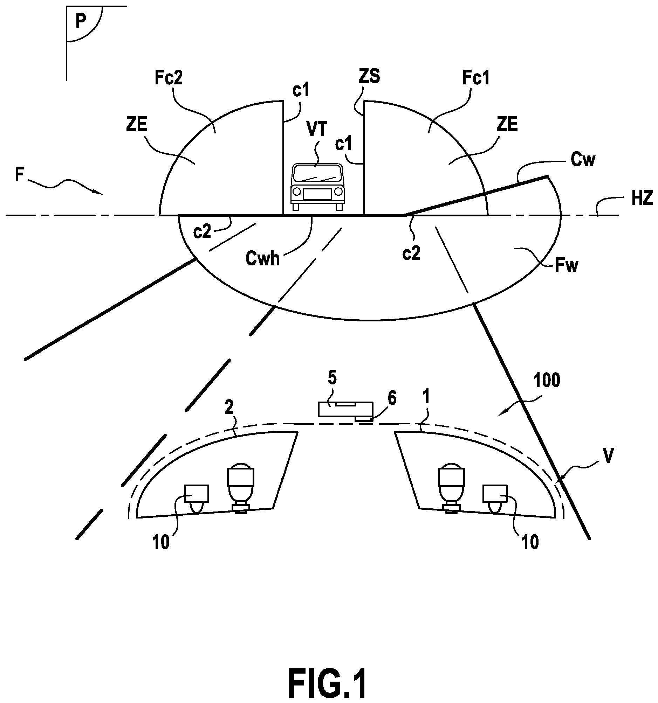

On a représenté sur la figure 1 un mode de réalisation de l'invention, se rapportant à une conduite de véhicule de type "trafic à droite".

On a représenté sur cette figure 1 un système d'éclairage 100 pour véhicule automobile permettant de réaliser la fonction ADB, comportant :

- un premier projecteur 1 agencé pour un montage côté droit du véhicule V,
- un deuxième projecteur 2 agencé pour un montage côté gauche du véhicule V.

Le véhicule V est équipé d'une caméra 5 par exemple placée à l'avant, et qui permet de détecter la présence d'un véhicule tiers VT circulant en sens inverse sur la voie opposée (gauche) ainsi que sa position (verticale et horizontale).

Du fait que le véhicule adverse VT circule sur la voie de gauche, la partie droite de la chaussée (sur laquelle le processeur 6 de la caméra 5 ne détecte aucun véhicule) peut donc être totalement illuminée sans pour cela gêner le conducteur adverse du véhicule VT.

Les projecteurs 1 et 2 permettent de générer dans un faisceau global F une zone sombre ZS dans laquelle se trouve le véhicule tiers VT venant en sens inverse, de manière à éviter l'éblouissement du conducteur du véhicule VT tout en éclairant la route dans sa plus grande surface.

Dans l'exemple décrit, en mode de croisement avec le véhicule tiers VT, le faisceau global F est formé par les faisceaux suivants :

- un ou deux faisceaux complémentaires Fc1 et Fc2,
- un faisceau Fw à coupure oblique de type code, avec un bord de coupure Cwo à 15° et un bord de coupure Cwh horizontal,
- éventuellement un faisceau à coupure plate.

Ce faisceau à coupure plate peut correspondre à un faisceau code partiel du projecteur gauche. Dans certaines configurations (notamment lorsque le mécanisme d'orientation entraîne à la fois le code et les modules ADB), afin d'éviter des mouvements de lumière proche, on peut envisage d'utiliser aussi le code partiel du projecteur droit seulement dans cette configuration (toutefois, on perd alors de la lumière et de la portée à droite).

La zone sombre ZS est délimitée par les faisceaux complémentaires Fc1 et Fc2 et se déplace pour suivre le mouvement du véhicule tiers VT détecté par la caméra 5.

Le ou les faisceaux de type code, notamment lorsqu'ils sont réalisés à partir de sources de lumière du type de diodes électroluminescentes et, en général, de plus d'une source de lumière par projecteur, peuvent, si on le souhaite, être constitués de deux faisceaux partiels, indépendamment commutables, dont l'un présente une coupure plate et le second un coupure en V, conformément aux réglementations. L'effet de code virage peut avantageusement être réalisé dans cette configuration en ne faisant tourner (autour d'un axe sensiblement vertical) que le module à coupure en V, afin d'éclairer la route de manière optimale dans les courbes sans provoquer de mouvement global du faisceau, mouvement qui, provoquant le déplacement de la lumière proche du véhicule peut distraire ou gêner le conducteur.

Dans la configuration décrite précédemment, le faisceau en « voile de navire » Fc1 ou Fc2 constitue un troisième faisceau, mobile autour d'un axe sensiblement vertical, à l'instar du faisceau code partiel à coupure en V. Le module optique créant le faisceau en « voile de navire » peut alors être muni d'un dispositif mécanique d'orientation autonome ou être entraîné par celui du faisceau à coupure en V, lorsque ce dernier est présent (par exemple, les modules créant les faisceaux en V et en voile de navire sont mécaniquement solidaires).

En mode ADB, les faisceaux partiels code à coupure plate statiques sont maintenus allumés et les faisceau à coupure en V éteints (les deux ou seulement celui susceptible d'engendrer des éblouissements). Les dispositifs d'orientation des faisceaux en voile de navire peuvent alors être utilisés de manière à créer une zone non éblouissante pour les autres véhicules détectés.

On va maintenant décrire ci-dessous la construction d'une unité optique 10, qui équipe le projecteur 2, capable de créer le faisceau Fc2 envoyant de la lumière sensiblement uniquement au dessus de l'horizontal HZ et à gauche de l'axe optique et ayant deux bords de coupure C1 vertical et C2 horizontal,.

Pour l'autre faisceau complémentaire Fc1 nécessaire à la réalisation de la fonction ADB, on utilisera une unité optique 10 symétrique de la précédente par rapport à un plan vertical et installée dans l'autre projecteur 1.

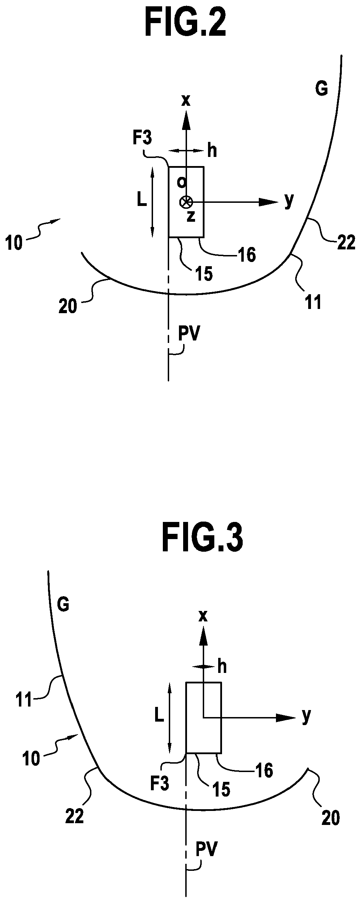

L'unité optique 10 dans le projecteur de gauche 2 est décrite ci-après. Comme illustré sur la figure 2, cette unité optique 10 comporte :

- une source de lumière à LED 15,
- un réflecteur 11 agencé pour réfléchir au moins une partie de la lumière émise par la source de lumière, ce réflecteur étant agencé pour permettre la formation du faisceau lumineux complémentaire Fc2 ayant un axe optique Ox et pouvant être associé à un autre faisceau à coupure, pour participer au faisceau global F qui est réglable en fonction d'une information représentative de l'environnement du véhicule automobile, notamment d'une information représentative de la présence d'un véhicule tiers à proximité dudit véhicule, ce faisceau complémentaire produisant, dans un plan P perpendiculaire à l'axe optique du faisceau complémentaire, une zone d'éclairement ZE présentant des premier et deuxième bords de coupure C1 et C2 faisant entre eux sensiblement un angle droit, cette zone d'éclairement s'étendant majoritairement dans un quart de plan délimité par les premier et deuxième bords de coupure.

Comme illustré sur la figure 2, la LED 15 comporte un émetteur 16 rectangulaire plan contenu dans un plan z = 0. L et h sont respectivement le grand côté et le petit côté du rectangle. Le centre de l'émetteur 16 est placé à 9 l'origine 0 du repère. Un des côtés de l'émetteur 16, par exemple le grand côté du rectangle, est parallèle à l'axe optique Ox du réflecteur.

### Première méthode de mise en oeuvre de l'invention

Dans cet exemple, on utilise un paraboloïde focalisé sur un des coins de l'émetteur 16 pour réaliser un premier secteur réfléchissant 20 du réflecteur 11.

### 1/ Cas où la LED 15 émet vers le haut

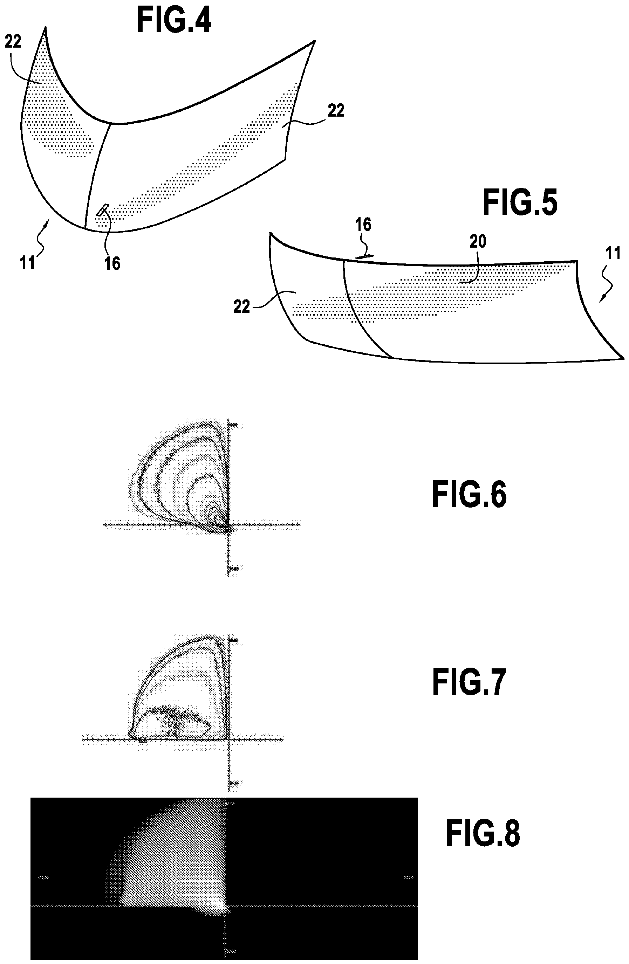

Le premier secteur 20, à gauche sur la figure 4 (en vie arrière), présente une forme de paraboloïde avec un foyer F3 sur le coin avant gauche de l'émetteur 16, de focale $f + {}^L/_2$ ($f$ étant un paramètre de conception). Ce premier secteur 20 du réflecteur est arrêté au plan vertical PV contenant le bord gauche de l'émetteur 16.

Au-delà de ce plan PV, à droite, le deuxième secteur réfléchissant 22 est construit comme suit.

### a/ construction d'une courbe plane G (génératrice de surface complexe)
G est de la forme x(y) où

$$x = \frac{\left(y + \dfrac{h}{2}\right)^2}{4f_1} - f_1 - \frac{L}{2} \text{ pour } x < -\frac{L}{2} \text{ et } x = \frac{\left(y - \dfrac{h}{2}\right)^2}{4f_2} - f_2 - \frac{L}{2} \text{ pour } x \geq -\frac{L}{2},$$

où

$$f_1 = f - \frac{L}{2} \text{ et } f_2 = f_1 - \frac{h}{2}$$

**b/ construction du deuxième secteur 22**
soit (x,y) un point de G et z une cote quelconque
on pose

$$\varepsilon = -1 \text{ si } x < -\frac{L}{2} \text{ et } \varepsilon = +1 \text{ si } x \geq -\frac{L}{2}$$

on pose

$$\vec{I_G} = \begin{bmatrix} -\dfrac{L}{2} - x \\ \varepsilon \dfrac{h}{2} - y \end{bmatrix}, \quad \vec{n} = \dfrac{\dfrac{\vec{I_G}}{\|\vec{I_G}\|} + \vec{x}}{\left\| \dfrac{\vec{I_G}}{\|\vec{I_G}\|} + \vec{x} \right\|}, \quad \vec{I} = \begin{bmatrix} x - \dfrac{L}{2} \\ y + \dfrac{h}{2} \end{bmatrix}, \quad f_S = -\vec{I} \cdot \vec{n},$$

$$\vec{r} = \dfrac{\vec{I} + 2 f_S \vec{n}}{\|\vec{I} + 2 f_S \vec{n}\|} = \begin{bmatrix} r_x \\ r_y \end{bmatrix}, \quad \lambda = \dfrac{z^2}{4 f_s} \Big/ \vec{n} \cdot \vec{r}$$

alors le point $\begin{bmatrix} x + \lambda r_x \\ y + \lambda r_y \\ z \end{bmatrix}$ est un point de la surface du deuxième secteur 22.

Ce deuxième secteur 22 correspond à un quart de surface complexe avec une génératrice particulière et un foyer unique au coin ad hoc de l'émetteur 16 (et non sur l'axe comme dans une surface complexe classique), les deux permettant de garantir l'absence de lumière à droite de l'axe optique et une coupure horizontale.
On a représenté sur la figure 4 un exemple de réflecteur ainsi obtenu.

## 2/ Cas où la LED 15 émet vers le bas

Le premier secteur 20 du réflecteur 11 (en vue arrière) présente une forme de paraboloïde focalisé en F3 sur le coin arrière gauche de l'émetteur 16, de focale $f - \frac{L}{2}$. Ce secteur 20 est arrêté au plan vertical PV contenant le bord gauche de l'émetteur 16.
A gauche de ce plan PV, on peut utiliser un deuxième secteur 22 construit comme suit.

### a. construction d'une courbe plane G
G est de la forme x(y) où

$$x = \dfrac{\left(y + \dfrac{h}{2}\right)^2}{4 f_1} - f_1 + \dfrac{L}{2} \text{ pour } x < \dfrac{L}{2} \text{ et } x = \dfrac{\left(y - \dfrac{h}{2}\right)^2}{4 f_2} - f_2 + \dfrac{L}{2} \text{ pour } x \geq \dfrac{L}{2},$$

où

$$f_1 = f + \frac{L}{2} \text{ et } f_2 = f_1 + \frac{h}{2}$$

**b. construction du deuxième secteur 22**

soit (x,y) un point de G et z une cote quelconque
on pose

$$\varepsilon = -1 \text{ si } x < \frac{L}{2} \text{ et } \varepsilon = +1 \text{ si } x \geq \frac{L}{2}$$

on pose

$$\vec{I_G} = \begin{bmatrix} \dfrac{L}{2} - x \\ \varepsilon \dfrac{h}{2} - y \end{bmatrix}, \quad \vec{n} = \dfrac{\dfrac{\vec{I_G}}{\|\vec{I_G}\|} + \vec{x}}{\left\|\dfrac{\vec{I_G}}{\|\vec{I_G}\|} + \vec{x}\right\|}, \quad \vec{I} = \begin{bmatrix} x + \dfrac{L}{2} \\ y + \dfrac{h}{2} \end{bmatrix}, \quad f_S = -\vec{I} \cdot \vec{n},$$

$$\vec{r} = \dfrac{\vec{I} + 2 f_S \vec{n}}{\|\vec{I} + 2 f_S \vec{n}\|} = \begin{bmatrix} r_x \\ r_y \end{bmatrix}, \quad \lambda = \dfrac{z^2}{4 f_s} \Big/ \vec{n} \cdot \vec{r}$$

alors le point $\begin{bmatrix} x + \lambda r_x \\ y + \lambda r_y \\ z \end{bmatrix}$ est un point de la surface du deuxième secteur réfléchissant 22.

Ce deuxième secteur 22 correspond à un quart de surface complexe avec une génératrice particulière et un foyer unique au coin ad hoc de l'émetteur 16 (et non sur l'axe comme dans une surface complexe classique), les deux permettant de garantir l'absence de lumière à droite de l'axe optique et une coupure horizontale.
On a représenté sur la figure 5 un exemple de réflecteur 11 ainsi obtenu.
On constate que, dans les exemples décrits ci-dessus, la surface réfléchissante dans son ensemble est continue (pas de décrochement) car les focales sont toutes calculées pour ce faire à partir d'une valeur unique f.
On a représenté sur les figures 6, 7 et 8 respectivement :

- la zone d'éclairement dans un plan perpendiculaire à l'axe optique obtenue à l'aide du premier secteur 20 en forme de paraboloïde des figures 3 et 5,
- la zone d'éclairement dans un plan perpendiculaire à l'axe optique obtenue à l'aide du deuxième secteur 22 des figures 3 et 5,
- la zone d'éclairement correspondant à la somme des deux zones précédentes.

**Seconde méthode de mise en oeuvre de l'invention**

Dans cette méthode, on se propose de remplacer le secteur parabolique par un secteur de réflecteur de type surface complexe adapté.
Considérons le cas d'une LED émettant vers le bas.
On cherche à calculer le secteur droit 30 du réflecteur.

### a. construction d'une courbe plane g

soit $V(z)$ une fonction arbitraire (paramètre de conception) telle que $\forall z \leq 0, V(z) \geq 0$

g (comprise dans le plan y = 0) est décrite par une fonction $x_g(z)$ telle que $x_g(0) = -f$ et, si on pose

$$\vec{I_g} = \begin{bmatrix} -\dfrac{L}{2} - x_g(z) \\ -z \end{bmatrix}, \quad \vec{R_g} = \begin{bmatrix} \dfrac{1}{V(z)} \\ \dfrac{1}{100} \end{bmatrix}, \quad \vec{n_g} = \dfrac{\dfrac{\vec{I_g}}{\left\| \vec{I_g} \right\|} + \dfrac{\vec{R_g}}{\left\| \vec{R_g} \right\|}}{\left\| \dfrac{\vec{I_g}}{\left\| \vec{I_g} \right\|} + \dfrac{\vec{R_g}}{\left\| \vec{R_g} \right\|} \right\|} = \begin{bmatrix} n_{gx} \\ n_{gz} \end{bmatrix},$$

alors

$$\frac{dx_g}{dz} = -\frac{n_{gz}}{n_{gx}},$$

ce qui constitue une équation différentielle sous forme canonique, qui peut être résolue numériquement.

(le paramètre $V(z)$ est une courbe de déviations verticales (vers le haut) en pourcents)

### b. construction du secteur 30 de réflecteur

pour tout $z \leq 0$ et tout $y \geq -\dfrac{h}{2}$, on pose :

$$f_s = \vec{I_g}(z) \cdot \vec{n_g}(z), \quad \vec{r} = \frac{\vec{R_g}(z)}{\left\| \vec{R_g}(z) \right\|} = \begin{bmatrix} r_x \\ r_z \end{bmatrix}$$

si

$$y < 2f_s - \frac{h}{2}, \quad \Lambda = \frac{\left( y + \dfrac{h}{2} \right)^2}{4f_s} \quad \text{sinon} \quad \Lambda = \frac{\left( y - \dfrac{h}{2} \right)^2}{4\left( f_s - \dfrac{h}{2} \right)} + \frac{h}{2}$$

et

$$\lambda = \frac{\Lambda}{\vec{n_g}(z) \cdot \vec{r}}$$

alors le point $\begin{bmatrix} x + \lambda r_x \\ y \\ z + \lambda r_z \end{bmatrix}$ appartient à la surface du secteur 30 de réflecteur.

Ce secteur 30 peut être vu comme un quart (on prend la partie en haut à droite en vue de derrière) de surface complexe à foyers pilotés conçu pour une source axiale plane émettant latéralement et ayant une génératrice particulière (pour n'avoir de la lumière qu'à gauche de l'axe optique), pivoté de 90° (dans le sens horaire) autour de l'axe optique.

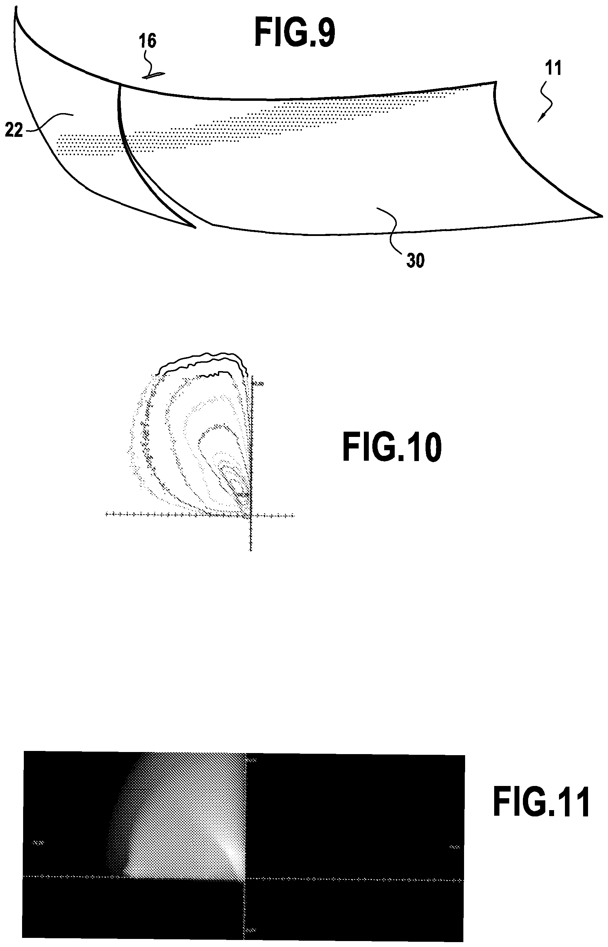

On a représenté sur la figure 9 un exemple de réflecteur 11 ainsi obtenu.

Le secteur droit 30 est obtenu comme décrit juste ci-dessus et le secteur gauche est identique au secteur 22 décrit plus haut.

On voit apparaître une discontinuité entre ces secteurs 22 et 30.

La zone d'éclairement obtenue à l'aide du secteur 30 est illustrée sur la figure 10.

La zone d'éclairement obtenue à l'aide à la fois des secteurs 22 et 30 est illustrée sur la figure 11.

On a bien les deux coupures nettes C1 et C2.

Dans une variante de l'invention, il est possible de construire le secteur gauche du réflecteur 11 par la seconde méthode. Les changements sont les suivants.

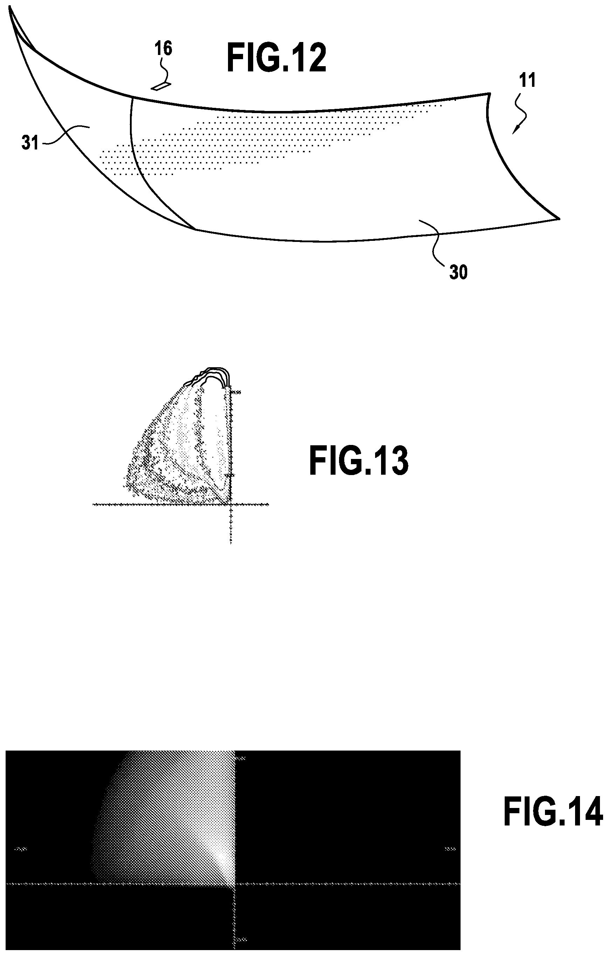

**b'. construction du secteur 31 à gauche sur la figure 12**

pour tout $z \leq 0$ et tout $y \leq -\dfrac{h}{2}$, on pose :

$$\vec{I} = \begin{bmatrix} x_g(z) - \dfrac{L}{2} \\ z \end{bmatrix}, \quad f_s = -\vec{I} \cdot \overrightarrow{n_g}(z), \quad \vec{r} = \dfrac{\vec{I} + 2f_s\overrightarrow{n_g}(z)}{\left\| \vec{I} + 2f_s\overrightarrow{n_g}(z) \right\|} = \begin{bmatrix} r_x \\ r_z \end{bmatrix}$$

si

$$y > -2f_s - \dfrac{h}{2}, \quad \Lambda = \dfrac{\left(y + \dfrac{h}{2}\right)^2}{4f_s} \quad \text{sinon} \quad \Lambda = \dfrac{\left(y - \dfrac{h}{2}\right)^2}{4\left(f_s + \dfrac{h}{2}\right)} - \dfrac{h}{2}$$

(la suite est inchangée)

Ce secteur 31 peut être vu comme un quart (on prend la partie en haut à gauche en vue de derrière) de surface complexe à foyers pilotés inversé (la lumière est en dessous de la coupure) conçu pour une source axiale plane émettant latéralement et ayant une génératrice particulière (pour n'avoir de la lumière qu'à droite de l'axe optique), pivoté de 90° (dans le sens trigonométrique) autour de l'axe optique.

Si on utilise le même paramètre V(z) pour les deux côtés, on obtient une surface réfléchissante continue.

La zone d'éclairement obtenue à l'aide du secteur 31 est illustrée sur la figure 13.

La zone d'éclairement obtenue à l'aide à la fois des secteurs 30 et 31 est illustrée sur la figure 14.

Bien entendu, l'invention n'est pas limitée aux exemples de mise en oeuvre qui viennent d'être décrits.

Par exemple, il est possible de transposer la seconde méthode au cas des LEDs émettant vers le haut.

On voit en outre que d'autres combinaisons sont possibles entre les deux méthodes, y compris par exemple un secteur de paraboloïde combiné avec un secteur de réflecteur du dernier type détaillé ci-dessus.

**Revendications**

1. Unité optique (10), pour dispositif de signalisation et/ou d'éclairage pour véhicule automobile, cette unité comportant :

    - au moins une source de lumière (15), l'unité optique étant agencée pour permettre la formation d'un faisceau lumineux complémentaire suivant un axe optique et pouvant être associé à un autre faisceau, notamment à coupure, pour participer à un faisceau global (F) qui est réglable en fonction d'une information représentative de l'environnement du véhicule automobile, notamment d'une information représentative de la présence d'un véhicule tiers à proximité dudit véhicule, ce faisceau complémentaire produisant, dans un plan perpendiculaire à l'axe optique du faisceau complémentaire, une zone d'éclairement présentant des premier et deuxième bords de coupure (C1 et C2) faisant entre eux sensiblement un angle droit, cette zone d'éclairement s'étendant majoritairement dans un quart de plan délimité par les premier et deuxième bords de coupure, l'unité étant **caractérisée par le fait qu'**elle comporte au moins un réflecteur (11) agencé pour réfléchir au moins une partie de la lumière émise par la source de lumière, ce réflecteur étant agencé pour permettre la formation du faisceau lumineux complémentaire ayant un axe optique et pouvant être associé à un autre faisceau, notamment à coupure, pour participer au faisceau global (F) qui est réglable en fonction d'une information représentative de l'environnement du véhicule automobile, notamment d'une information représentative de la présence d'un véhicule tiers à proximité dudit véhicule, ce faisceau complémentaire produisant, dans le plan perpendiculaire à l'axe optique du faisceau complémentaire, la zone d'éclairement présentant les premier et deuxième bords de coupure (C1 et C2) faisant entre eux sensiblement un angle droit, cette zone d'éclairement s'étendant majoritairement dans un quart de plan délimité par les premier et deuxième bords de coupure, et **par le fait que** le réflecteur (11) comporte des premier et deuxième secteurs réfléchissants (20 ; 22 ; 30 ; 31) ayant des formes géométriques différentes.

2. Unité selon la revendication précédente, **caractérisée par le fait que** les premier et deuxième bords de coupure (C1 et C2) du faisceau complémentaire se coupent en formant sensiblement un angle droit.

3. Unité selon l'une des revendications précédentes, **caractérisée par le fait que** le premier bord de coupure (C2) s'étend sensiblement horizontalement et le deuxième bord (C1) sensiblement verticalement lorsque l'unité optique est sur le véhicule.

4. Unité selon l'une des revendications précédentes, **caractérisée par le fait que** l'un au moins des premier et deuxième bords est sensiblement rectiligne.

5. Unité selon l'une des revendications précédentes, **caractérisée par le fait que** les deux secteurs réfléchissants (20 ; 22) sont jointifs suivant une bordure commune.

6. Unité selon l'une des revendications précédentes, **caractérisée par le fait que** les deux secteurs (22 ; 30) se rejoignent suivant seulement un point ou sont distants l'un de l'autre.

7. Unité selon l'une des revendications précédentes, **caractérisée par le fait que** le faisceau complémentaire est associé à un faisceau à coupure, notamment une coupure code, ces deux faisceaux étant de préférence côte à côte, sensiblement sans recouvrement.

8. Unité selon l'une des revendications précédentes, **caractérisée par le fait que** la source de lumière (15) comporte au moins une LED, notamment à émetteur rectangulaire (16) de lumière, cet émetteur rectangulaire s'étendant notamment dans un plan, notamment un plan sensiblement horizontal.

9. Unité selon la revendication précédente, **caractérisée par le fait que** l'un des côtés de l'émetteur (16) de la LED est disposé de manière sensiblement parallèle à un axe optique du réflecteur.

10. Unité selon l'une des revendications précédentes, **caractérisée par le fait que** le premier des secteurs réfléchissants (20) du réflecteur (11) présente une forme sensiblement de paraboloïde, de préférence focalisé sur l'un des coins de l'émetteur (16) de la LED, ce premier secteur s'interrompant de préférence sur un plan (PV), notamment vertical, contenant un bord de l'émetteur (16).

11. Unité selon l'une des revendications 1 à 9, **caractérisée par le fait que** le premier secteur réfléchissant (22) correspond à un secteur de surface complexe pour produire de la lumière seulement d'un côté de l'axe optique.

12. Unité selon l'une des revendications précédentes, **caractérisée par le fait que** le deuxième secteur réfléchissant (22) correspond à un secteur de surface complexe avec une génératrice prédéterminée et un foyer unique sur un coin de l'émetteur (16).

13. Dispositif d'éclairage et/ou de signalisation, notamment un projecteur, comportant au moins une unité (10) selon l'une des revendications précédentes.

14. Dispositif selon la revendication précédente, **caractérisé par le fait que** l'unité optique est agencée pour produire un faisceau lumineux complémentaire ayant un axe optique et pouvant être associé à un autre faisceau, notamment à coupure, produit par ce dispositif d'éclairage et/ou de signalisation, pour participer à un faisceau global (F) qui est réglable en fonction d'une information représentative de l'environnement du véhicule automobile, notamment d'une information représentative de la présence d'un véhicule tiers à proximité dudit véhicule.

15. Ensemble de deux unités optiques (10) selon l'une des revendications 1 à 12, agencé pour générer une zone non éblouissante (ZS) dans un faisceau lumineux, cette zone étant délimitée par les faisceaux complémentaires respectifs des unités (10).

16. Procédé pour produire un faisceau lumineux pour véhicule automobile, à l'aide d'une unité optique (10) selon l'une des revendications 1 à 12, ce procédé comportant l'étape suivante :

- générer un bord de coupure sensiblement vertical et un bord de coupure sensiblement horizontal, par imagerie, de préférence à l'aide d'une LED ayant un émetteur (16) dans un plan sensiblement horizontal.

**Patentansprüche**

1. Optische Einheit (10) für eine Signalgebungs- und/oder Beleuchtungseinheit für Kraftfahrzeuge, umfassend:

- wenigstens eine Lichtquelle (15),

wobei die optische Einheit dazu ausgebildet ist, das Bilden eines Zusatzlichtbündels längs einer optischen Achse zu ermöglichen, das einem anderen Lichtbündel, insbesondere mit Hell-Dunkel-Grenze, zuordenbar ist, um an einem Gesamtlichtbündel (F) mitzuwirken, das in Abhängigkeit einer für das Umfeld des Kraftfahrzeugs repräsentativen Information einstellbar ist, insbesondere einer Information, die für die Existenz eines weiteren Fahrzeugs in der Nähe des Fahrzeugs repräsentativ ist, wobei das Zusatzlichtbündel in einer zur optischen Achse des Zusatzlichtbündels senkrechten Ebene einen Ausleuchtungsbereich erzeugt, der einen ersten und einen zweiten Begrenzungsrand (C1 und C2) aufweist, die miteinander im Wesentlichen einen rechten Winkel bilden, wobei sich der Ausleuchtungsbereich überwiegend in einem Viertel der Ebene erstreckt, das von dem ersten und dem zweiten Begrenzungsrand begrenzt ist,
wobei die Einheit **dadurch gekennzeichnet ist, dass** sie wenigstens einen Reflektor (11) umfasst, der zum Reflektieren wenigstens eines Teils des von der Lichtquelle emittierten Lichts ausgebildet ist, wobei der Reflektor dazu ausgebildet ist, das Bilden des Zusatzlichtbündels zu ermöglichen, das eine optische Achse aufweist und einem anderen Lichtbündel, insbesondere mit Hell-Dunkel-Grenze, zuordenbar ist, um an dem Gesamtlichtbündel (F) mitzuwirken, das in Abhängigkeit einer für das Umfeld des Kraftfahrzeugs repräsentativen Information einstellbar ist, insbesondere einer Information, die für die Existenz eines weiteren Fahrzeugs in der Nähe des Fahrzeugs repräsentativ ist, wobei das Zusatzlichtbündel in der zur optischen Achse des Zusatzlichtbündels senkrechten Ebene einen Ausleuchtungsbereich erzeugt, der einen ersten und einen zweiten Begrenzungsrand (C1 und C2) aufweist, die miteinander im Wesentlichen einen rechten Winkel bilden, wobei sich der Ausleuchtungsbereich überwiegend in einem Viertel der Ebene erstreckt, das von dem ersten und dem zweiten Begrenzungsrand begrenzt ist, und dadurch, dass der Reflektor (11) einen ersten und einen zweiten reflektierenden Sektor (20; 22; 30; 31) mit unterschiedlichen geometrischen Formen aufweist.

2. Einheit nach dem vorhergehenden Anspruch,
**dadurch gekennzeichnet, dass** der erste und der zweite Begrenzungsrand (C1 und
C2) des Zusatzlichtbündels sich schneiden und dabei einen im Wesentlichen rechten Winkel bilden.

3. Einheit nach einem der vorhergehenden Ansprüche,
**dadurch gekennzeichnet, dass** der erste Begrenzungsrand (C2) im Wesentlichen horizontal und der zweite Begrenzungsrand (C1) im Wesentlichen vertikal verläuft, wenn die optische Einheit sich am Fahrzeug befindet.

4. Einheit nach einem der vorhergehenden Ansprüche,
**dadurch gekennzeichnet, dass** wenigstens einer des ersten und des zweiten Rands im Wesentlichen gerade ist.

5. Einheit nach einem der vorhergehenden Ansprüche,
**dadurch gekennzeichnet, dass** die beiden reflektierenden Sektoren (20; 22) entlang eines gemeinsamen Rands aneinanderstoßen.

6. Einheit nach einem der vorhergehenden Ansprüche,
**dadurch gekennzeichnet, dass** die beiden Sektoren (22; 30) nur in einem Punkt aneinandergrenzen oder voneinander beabstandet sind.

**7.** Einheit nach einem der vorhergehenden Ansprüche,
**dadurch gekennzeichnet, dass** das Zusatzlichtbündel einem Lichtbündel mit Hell-Dunkel-Grenze zugeordnet ist, insbesondere einer Hell-Dunkel-Grenze für Abblendlicht, wobei die beiden Lichtbündel im Wesentlichen ohne Überschneidung vorzugsweise nebeneinanderliegen.

**8.** Einheit nach einem der vorhergehenden Ansprüche,
**dadurch gekennzeichnet, dass** die Lichtquelle (15) wenigstens eine LED umfasst, insbesondere einen Rechtecklichtstrahler (16), wobei sich der Rechteckstrahler im Wesentlichen in einer Ebene, insbesondere einer im Wesentlichen horizontalen Ebene erstreckt.

**9.** Einheit nach dem vorhergehenden Anspruch,
**dadurch gekennzeichnet, dass** eine der Seiten des Strahlers (16) der LED im Wesentlichen parallel zu einer optischen Achse des Reflektors angeordnet ist.

**10.** Einheit nach einem der vorhergehenden Ansprüche,
**dadurch gekennzeichnet, dass** der erste reflektierende Sektor (20) des Reflektors (11) eine im Wesentlichen paraboloidartige Form aufweist, der vorzugsweise auf eine der Ecken des Strahlers (16) der LED fokussiert ist, wobei der erste Sektor vorzugsweise in einer insbesondere vertikalen, einen der Ränder des Strahlers (16) enthaltenden Ebene (PV) unterbrochen ist.

**11.** Einheit nach einem der Ansprüche 1 bis 9,
**dadurch gekennzeichnet, dass** der erste reflektierende Sektor (22) einem Freiflächensektor entspricht, um Licht nur auf einer Seite der optischen Achse zu erzeugen.

**12.** Einheit nach einem der vorhergehenden Ansprüche,
**dadurch gekennzeichnet, dass** der zweite reflektierende Sektor (22) einem Freiflächensektor mit einer vorbestimmten Erzeugenden und einem einzigen Brennpunkt in einer Ecke des Strahlers (16) entspricht.

**13.** Beleuchtungs- und/oder Signalgebungsvorrichtung, insbesondere ein Scheinwerfer, mit wenigstens einer Einheit (10) nach einem der vorhergehenden Ansprüche.

**14.** Vorrichtung nach dem vorhergehenden Anspruch,
**dadurch gekennzeichnet, dass** die optische Einheit dazu ausgebildet ist, ein Zusatzlichtbündel zu erzeugen, das eine optische Achse aufweist und einem anderen Lichtbündel, insbesondere mit Hell-Dunkel-Grenze, zuordenbar ist, das von der Beleuchtungs- und/oder Signalgebungsvorrichtung erzeugt wird, um an einem Gesamtlichtbündel (F) mitzuwirken, das in Abhängigkeit einer für das Umfeld des Kraftfahrzeugs repräsentativen Information einstellbar ist, insbesondere einer Information, die für die Existenz eines weiteren Fahrzeugs in der Nähe des Fahrzeugs repräsentativ ist.

**15.** Anordnung aus zwei optischen Einheiten (10) nach einem der Ansprüche 1 bis 12, die dazu ausgebildet ist, einen blendfreien Bereich (ZS) in einem Lichtbündel zu erzeugen, wobei dieser Bereich durch die jeweiligen Zusatzlichtbündel der Einheiten (10) begrenzt ist.

**16.** Verfahren zum Erzeugen eines Lichtbündels für ein Kraftfahrzeug mit Hilfe einer optischen Einheit (10) nach einem der Ansprüche 1 bis 12, wobei das Verfahren den folgenden Schritt umfasst:

- Erzeugen eines im Wesentlichen senkrechten Begrenzungsrands und eines im Wesentlichen waagerechten Begrenzungsrands durch Bilderzeugung vorzugsweise mit Hilfe einer LED mit einem Strahler (16) in einer im Wesentlichen horizontalen Ebene.

**Claims**

**1.** Optical unit (10) for a signalling and/or lighting device for a motor vehicle, this unit comprising:

- at least one light source (15),

the optical unit being arranged so as to allow the formation of a complementary light beam along an optical axis and able to be associated with another beam, in particular a cutoff beam, to participate in a global beam (F) that is adjustable according to information representing the environment of the motor vehicle, in particular information representing the presence of a third-party vehicle close to said vehicle, this complementary beam producing, in a plane perpendicular to the optical axis of the complementary beam, an illumination zone having first and second cutoff edges (C1 and C2) forming between them substantially a right angle, this illumination zone extending mainly in a quarter plane delimited by the first and second cutoff edges, the unit being **characterised in that** is comprises at least one reflector (11) arranged to reflect at least part of the light emitted by the light source, this reflector being arranged to allow the formation of the complementary light beam having an optical axis and able to be associated with another beam, in particular a cutoff beam, to participate in a global beam (F) that is adjustable according to information representing the environment of the motor vehicle, in particular information representing the presence of a third-party vehicle close to said vehicle, this complementary beam producing, in the plane perpendicular to the optical axis of the complementary beam, the illumination zone having the first and second cutoff edges (C1 and C2) forming between them substantially a right angle, this illumination zone lying mainly in a quarter plane delimited by the first and second cutoff edges, and **in that** the reflector (11) comprises first and second reflective sectors (20; 22; 30; 31) having different geometric shapes.

2. Unit according to the preceding claim, **characterised in that** the first and second cutoff edges (C1 and C2) of the complementary beam intersect while forming substantially a right angle.

3. Unit according to one of the preceding claims, **characterised in that** the first cutoff edge (C2) extends substantially horizontally and the second edge (C1) substantially vertically when the optical unit is on the vehicle.

4. Unit according to one of the preceding claims, **characterised in that** at least one of the first and second edges is substantially rectilinear.

5. Unit according to one of the preceding claims, **characterised in that** the two reflective sectors (20; 22) are contiguous along a common edge.

6. Unit according to one of the preceding claims, **characterised in that** the two sectors (22; 30) join at only one point and are distant from each other.

7. Unit according to one of the preceding claims, **characterised in that** the complementary beam is associated with a cutoff beam, in particular a dipped cutoff beam, these two beams preferably being side by side, substantially without overlap.

8. Unit according to one of the preceding claims, **characterised in that** the light source (15) comprises at least one LED, in particular with a rectangular light emitter (16), this rectangular emitter lying in particular in one plane, in particular a substantially horizontal plane.

9. Unit according to the preceding claim, **characterised in that** one of the sides of the emitter (16) of the LED is disposed substantially parallel to the optical axis of the reflector.

10. Unit according to one of the preceding claims, **characterised in that** the first and second reflective sectors (20) of the reflector (11) has a substantially paraboloid shape, preferably focused on one of the corners of the emitter (16) of the LED, this first sector preferably being interrupted on a plane (PV), in particular vertical, containing one edge of the emitter (16).

11. Unit according to one of claims 1 to 9, **characterised in that** the first reflective sector (22) is a complex surface sector for producing light only on one side of the optical axis.

12. Unit according to one of the preceding claims, **characterised in that** the second reflective sector (22) is a complex surface sector with a predetermined generatrix and a single focus on one corner of the emitter (16).

13. Lighting and/or signalling device, in particular a headlight, comprising at least one unit (10) according to one of the preceding claims.

14. Device according to the preceding claim, **characterised in that** the optical unit is arranged so as to produce a complementary light beam having an optical axis and able to be associated with another beam, in particular a cutoff beam, produced by this lighting and/or signalling device, to participate in a global beam (F) that is adjustable according to information representing the environment of the motor vehicle, in particular information representing the presence of a third-party vehicle in the vicinity of said vehicle.

**15.** Set of two optical units (10) according to one of claims 1 to 12, arranged so as to generate a non-dazzling zone (ZS) in a light beam, this zone being delimited by the respective complementary beams of the units (10).

**16.** Method for producing a light beam for a motor vehicle, by means of an optical unit (10) according to one of claims 1 to 12, this method comprising the following step:

- generating a substantially vertical cutoff edge and a substantially horizontal cutoff edge, by imaging, preferably means of an LED having an emitter (16) in a substantially horizontal plane.

**FIG.1**

# FIG.2

# FIG.3

**FIG.4**

**FIG.5**

**FIG.6**

**FIG.7**

**FIG.8**

# FIG.9

16

22

11

30

# FIG.10

# FIG.11

FIG.12

16

11

31

30

FIG.13

FIG.14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2060442 A
- EP 099408 A